# EUROPÄISCHE PATENTANMELDUNG

(11) **EP 4 053 485 A1**
(43) Veröffentlichungstag der Anmeldung: **07.09.2022**
(21) Anmeldenummer: 21161139.7
(22) Anmeldetag: 05.03.2021
(51) Int. Cl.: F27B 7/16

(54) **DREHROHROFEN UND VERFAHREN ZUM BRENNEN VON KARBONATHALTIGEM GUT, INSBESONDERE KALKSTEIN ODER DOLOMIT**

(71) Anmelder: S.A. Lhoist Recherche et Développement, 1342 Ottignies-Louvain-la-Neuve (BE)
(72) Erfinder: Kaczinski, Carsten, 44319 Dortmund (DE)
(74) Vertreter: Cohausz & Florack

(57) **Zusammenfassung**

Die vorliegende Erfindung betrifft einen Drehrohrofen zum Brennen von karbonathaltigem Gut, insbesondere von Kalkstein oder Dolomit, umfassend ein Drehrohr (1) mit einem Einlaufende (2a) zur Aufgabe des zu brennenden Gutes und einem Auslaufende (4a) zur Ausleitung des gebranntes Gutes, wobei das Drehrohr (1) an seinem Einlaufende (2a) eine Einlaufzone (2) aufweist und an seinem Auslaufende (4a) eine Auslaufzone (4) aufweist, wobei zwischen der Einlaufzone (2) und Auslaufzone (4) eine Vorwärmzone (3a) und eine Brennzone (3b) angeordnet sind, wobei der Drehrohrofen erfindungsgemäß dadurch gekennzeichnet ist, dass in der Einlaufzone (2) des Drehrohrs (1) wenigstens ein Vorsprung (6) vorgesehen ist, wobei der wenigstens eine Vorsprung (6) wenigstens eine zur Längsachse des Drehrohrs (1) geneigte Gleitfläche (6a) zur Förderung des zu brennenden Gutes aus der Einlaufzone (2) in die Vorwärmzone (3a) aufweist. Ferner betrifft die vorliegende Erfindung ein Verfahren zum Brennen von karbonathaltigem Gut, insbesondere von Kalkstein oder Dolomit.

## Beschreibung

Die Erfindung betrifft einen Drehrohrofen zum Brennen von karbonathaltigem Gut, insbesondere Kalkstein oder Dolomit, umfassend ein Drehrohr mit einem Einlaufende zur Aufgabe des zu brennenden Gutes und einem Auslaufende zur Ausleitung des gebranntes Gutes, wobei das Drehrohr an seinem Einlaufende eine Einlaufzone aufweist und an seinem Auslaufende eine Auslaufzone aufweist, wobei zwischen der Einlaufzone und Auslaufzone eine Vorwärmzone und eine Brennzone angeordnet sind. Ferner betrifft die vorliegende Erfindung ein Verfahren zum Brennen von karbonathaltigem Gut, insbesondere Kalkstein und Dolomit, in einem solchen Drehrohrofen.

Drehrohröfen zum Brennen von karbonathaltigem Gut sind aus dem Stand der Technik seit Jahrzehnten bekannt und haben sich als effizient und zuverlässig arbeitender Ofentyp zum kontinuierlichen Kalzinieren verschiedener Arten von Materialien bewährt. Druckschriftlicher Stand der Technik findet sich beispielsweise in der EP 1 903 292 A2, der JP 2008/122043 A oder der US 5,975,752.

Zentraler Bestandteil eines Drehrohrofens ist ein langes, zylindrisches Drehrohr, welches typischerweise mit etwa 2 bis 7% zur Horizontalen geneigt ist. Das Drehrohr dreht sich langsam mit 0,5 bis 1,5 U/min um seine Achse und das in das Drehrohr an dessen Einlaufende mittels Förderschnecke o.ä. eingebrachte zu brennende Gut bewegt sich schwerkraftbedingt langsam durch das Drehrohr in Richtung einer im Bereich des Auslaufendes durch einen Brenner erzeugten Flamme. Der Ofen wird üblicherweise bis zu etwa 8 bis 20% des Ofendurchmessers mit dem zu brennenden Gut gefüllt.

Im Sinne eines effizienten Ofenbetriebs werden stets hohe Durchsatzraten angestrebt, wobei gleichzeitig sicherzustellen ist, dass die Kalzinierung des zu brennenden Gutes vollständig ist und dass das gesamte Kohlendioxid aus dem Material entfernt wird. Gleichzeitig ist es entscheidend, dass ein Sintern des Brenngutes verhindert wird, welches dann eintritt, wenn das Brenngut Temperaturen ausgesetzt wird, die über oder im Bereich seiner Sintertemperatur liegen.

Ein besonderes Problem kann sich im Bereich der Einlaufzone des Drehrohrs ergeben, da es dort infolge der geringen Neigung des Drehrohrs zur Horizontalen verbunden mit der konstanten Drehbewegung zu Rückwärtsbewegungen des zu brennenden Gutes kommen kann. Während eine solche Rückwärtsbewegung in der Brenn- oder Auslaufzone des Drehrohrofens unproblematisch ist, kann sie im Bereich der Einlaufzone u.a. zur Verstopfung der Aufgabemechanik führen. Insbesondere gilt dies bei für die Zuführung kleinerer Gutmengen vorgesehenen Becherwerken ("Bucket Conveyor"). Somit wird insgesamt ein effizienter gleichmäßiger Ofenbetrieb mit hohem Materialdurchsatz beeinträchtigt. Eine weitere Folge der Rückwärtsbewegung ist, dass das Brenngut an den Verschleißringen der Einlaufabdichtung zerrieben wird, wobei es zur Freisetzung von Staub in die Umwelt kommen kann.

Es ist daher Aufgabe der vorliegenden Erfindung, einen Drehrohrofen zum Brennen von karbonathaltigem Gut, insbesondere von Kalkstein oder Dolomit, der eingangsgenannten Art anzugeben, welcher einen hohen Materialdurchsatz und eine hohe Qualität des gebranntes Gutes sicherstellt und dabei gleichzeitig einfach aufgebaut ist. Insbesondere soll eine Rückwärtsbewegung des zu brennenden Gutes in der Einlaufzone zuverlässig minimiert werden.

Nach einem ersten Aspekt der vorliegenden Erfindung wird die vorstehend genannte Aufgabe mit einem Drehrohrofen nach dem Oberbegriff des Anspruchs 1 dadurch gelöst, dass in der Einlaufzone des Drehrohrs wenigstens ein Vorsprung vorgesehen ist, wobei der wenigstens eine Vorsprung wenigstens eine geneigte Gleitfläche zum Förderung des zu brennenden Gutes aus der Einlaufzone in die Brennzone aufweist.

Der erfindungsgemäße Drehrohrofen zeichnet sich durch einen zuverlässigen Betrieb bei hohem, gleichmäßigem Materialdurchsatz aus. Insbesondere ist durch das Vorsehen des wenigstens einen Vorsprungs mit der wenigstens einen geneigten Gleitfläche in der Einlaufzone des Drehrohrs sichergestellt, dass das über das Einlaufende in das Drehrohr eingeleitete zu brennende Gut zügig aus der Einlaufzone in die Brennzone transportiert bzw. gefördert wird. Dabei wird ausgenutzt, dass das zu brennende Gut durch die Rotation des wenigstens einen Vorsprungs durch das Gutbett auf der wenigstens einen Gleitfläche desselben zu liegen kommt und infolge der besonderen Neigung der Gleitfläche schwerkraftbedingt zügig in Richtung der Brennzone gleitet. Hierbei versteht es sich, dass die Drehrichtung des Drehrohrs und die Ausrichtung der Gleitfläche in Umfangsrichtung des Drehrohrs entsprechend zueinander anzupassen sind.

Da mit der erfindungsgemäßen Lösung also ein konstanter Transport des zu brennenden Gutes von der Einlaufzone zur Brennzone gewährleistet ist, wird das zu brennende Gut dort kontinuierlich und gleichmäßig gebrannt, wobei die Gefahr des Überbrennens oder Sinterns minimiert ist. Gleichzeitig wird die Staubbildung erheblich reduziert, da ein Zermahlen des zu brennenden Gutes an den Verschleißringen infolge einer Rückwärtsbewegung des Gutes in der Einlaufzone wirksam verhindert wird.

Erfindungsgemäß weist der wenigstens eine Vorsprung wenigstens eine zur Längsachse des Drehrohrs geneigte Gleitfläche zur Förderung des zu brennenden Gutes aus der Einlaufzone in die Brennzone auf. Um die Konstruktion des wenigstens einen Vorsprungs einfach und damit Fertigungskosten niedrig zu halten, kann der wenigstens eine Vorsprung bevorzugt genau eine geneigte Gleitfläche aufweisen. Es versteht sich, dass abhängig von der konkreten Anwendung und dem eingesetzten zu brennenden Gut jedoch auch mehrere Gleitflächen gleicher oder unterschiedlicher Neigung vorgesehen sein können.

Bei der wenigstens eine Gleitfläche können unterschiedliche Neigungswinkel vorgesehen sein. Nach einer vorteilhaften Ausgestaltung der Erfindung weist die wenigstens eine Gleitfläche des wenigstens einen Vorsprungs eine Neigung zur Längsachse des Drehrohrs von 15° bis 70°, insbesondere von 25° bis 65°, speziell von 35° bis 55°, auf. Besonders gute Ergebnisse wurden bei einem Neigungswinkel zwischen 40° und 50°, speziell ca. 45° erzielt.

Aufgrund der in der Einlaufzone des Drehrohrs, insbesondere in der Nähe der Brennzone, bereits herrschenden hohen Temperaturen wird bevorzugt, dass der wenigstens eine Vorsprung ein feuerfestes Material enthält. Hierbei kann es sich um verschiedene hoch temperaturbeständige Materialien handeln, wie aus dem Stand der Technik an sich bekannt. Als besonders geeignet erweist sich Beton, insbesondere Feuerbeton.

Für den wenigstens einen Vorsprung haben sich in zahlreichen Versuchen der Anmelderin verschiedene Geometrien als geeignet herausgestellt. Bevorzugt werden prismatische Geometrien, insbesondere in Form eines geraden Prismas mit polygonaler Grundfläche. Besonders bevorzugt wird eine dreieckige Grundfläche, speziell in Form eines rechtwinkligen Dreiecks, bei der die wenigstens eine Gleitfläche durch die Hypotenuse des rechtwinkligen Dreiecks gebildet wird.

Für eine besonders gute Wirksamkeit in Bezug auf die Förderung des zu brennenden Gutes von der Einlaufzone in Richtung der Brennzone ist die Höhe des wenigstens einen Vorsprungs, d.h. die Erstreckung in bezogen auf das zylindrische Drehrohr radialer Richtung, von Bedeutung. Nach einer vorteilhaften Ausgestaltung der Erfindung weist der wenigstens eine Vorsprung eine sich in radialer Richtung des Drehrohrs erstreckende Höhe von 100 mm bis 500 mm, insbesondere von 140 mm bis 400 mm, bevorzugt von 160 mm bis 300 mm und besonders bevorzugt von 180 mm bis 250 mm, auf. Hierdurch ist sichergestellt, dass auf der wenigstens einen Gleitfläche des wenigstens einen Vorsprungs hinreichend viel Gut aufliegt und durch die Neigung der Gleitfläche in der Folge in Richtung der Brennzone gleitet.

Ferner ist nach einer vorteilhaften Ausgestaltung der Erfindung vorgesehen, dass der wenigstens eine Vorsprung eine sich im Wesentlichen parallel zur Längsachse des Drehrohrs erstreckende Länge von 100 mm bis 2000 mm, insbesondere 150 mm bis 1000 mm, bevorzugt 300 mm bis 500 mm und ganz besonders bevorzugt 350 mm bis 450 mm, aufweist.

Der wenigstens eine Vorsprung kann dauerhaft mit der inneren Ausmauerung des Drehrohrs verbunden sein. Um jedoch eine sichere und dauerhafte Verbindung zwischen der inneren Ausmauerung des Drehrohrs und dem wenigstens einen Vorsprung sicherzustellen, ist nach einer weiteren vorteilhaften Ausgestaltung der Erfindung vorgesehen, dass der wenigstens eine Vorsprung mittels einer, insbesondere metallischen, Verankerung an der inneren Ausmauerung des Drehrohrs befestigt ist.

Nach einer besonders vorteilhaften Ausgestaltung der Erfindung ist vorgesehen, dass in der Einlaufzone des Drehrohrs eine Mehrzahl von Vorsprüngen vorgesehen ist, wobei die Vorsprünge derart als Gruppe aneinandergereiht angeordnet sind, dass die jeweiligen Gleitflächen der Vorsprünge eine gemeinsame Gleitfläche für das zu brennende Gut bilden. Hierdurch wird eine besonders wirkungsvolle Förderung des zu brennenden Gutes von der Einlaufzone des Drehrohrs zu dessen Brennzone erreicht. Hierbei können die einzelnen Vorsprünge auf Stoß, d.h. im Wesentlichen spaltfrei aneinandergereiht sein. Ebenso ist eine Aneinanderreihung mit dazwischen liegendem Spalt möglich, um beispielsweise thermische Ausdehnungen zu berücksichtigen, wobei die Spaltbreite jedoch derart bemessen sein muss, dass die Eigenschaft einer gemeinsamen Gleitfläche erhalten bleibt.

Dadurch, dass durch mehrere als Gruppe aneinandergereihte Vorsprünge eine gemeinsame Gleitfläche breitgestellt wird, kann einerseits eine besonders lange Gleitfläche bereitgestellt werden, welche sich praktisch entlang der gesamten Ausdehnung der Einlaufzone erstreckt. Andererseits ist die Montage einer Mehrzahl von Vorsprüngen im Vergleich zu einem sehr ausgedehnt ausgebildeten Vorsprung erleichtert. Gleichzeitig können im Falle einer Beschädigung beispielsweise eines einzelnen Vorsprungs aus der Gruppe aneinandergereihter Vorsprünge dieser gezielt ersetzt werden, ohne die Gesamtkonstruktion demontieren zu müssen.

Die Gruppe aneinandergereihter Vorsprünge kann eine unterschiedliche Zahl an Vorsprüngen umfassen. Insbesondere kann die gemeinsame Gleitfläche für das zu brennende Gut durch 3 bis 9 Vorsprünge, insbesondere durch 4 bis 8 Vorsprünge, speziell durch 5 bis 7 Vorsprünge und ganz besonders bevorzugt durch 6 Vorsprünge gebildet werden.

Besonders bevorzugt im Sinne einer möglichst einfachen Konstruktion des erfindungsgemäßen Drehrohrofens ist, dass die Mehrzahl von Vorsprüngen im Wesentlichen identisch zueinander ausgebildet sind, derart, dass eine gemeinsame Gleitfläche mit im Wesentlichen konstantem Gefälle bzw. Gleitwinkel zur Längsachse des Drehrohrs ausgebildet ist. Ferner kann vorgesehen sein, dass die Mehrzahl von Vorsprüngen entlang der Einlaufzone in gestufter Form als Gruppe aneinandergereiht angeordnet sind.

Eine weitere Verbesserung der Förderung des zu brennenden Gutes durch die Einlaufzone des Drehrohrs wird dadurch erzielt, dass über den Umfang des Drehrohrs 2 bis 8, insbesondere 3 bis 7, speziell 4 bis 6 und ganz besonders bevorzugt 5 Vorsprünge oder Gruppen aneinandergereihter Vorsprünge, angeordnet sind. Die geeignete Anzahl von Vorsprüngen wird insbesondere in Abhängigkeit vom Durchmesser des Drehrohrs gewählt.

Nach einer weiteren besonders vorteilhaften Ausgestaltung der Erfindung ist vorgesehen, dass das Drehrohr im Bereich der Vorwärmzone wenigstens einen weiteren Vorsprung, bevorzugt eine Mehrzahl von weiteren Vorsprüngen, zur schnelleren Durchleitung des Brenngutes durch die Vorwärmzone und zur Reduzierung der Staubbildung aufweist. Hierdurch wird das nunmehr schneller durch die Einlaufzone transportierte zu brennende Gut zügig und mit verbesserter Vermischung auch durch die Brennzone transportiert, so dass es insbesondere im Bereich des Übergangs von der Einlaufzone zur Vorwärmzone nicht zu Materialaufstauungen kommt, wodurch sich der Materialdurchsatz und die Produktqualität weiter verbessern lassen.

Nach einer vorteilhaften Weiterbildung des Vorstehenden kann zudem vorgesehen sein, dass im Bereich der Vorwärmzone eine Mehrzahl von weiteren Vorsprüngen vorgesehen ist, wobei die weiteren Vorsprünge als Gruppen im Wesentlichen parallel zur Längsachse des Drehrohrs angeordnet sind. Dabei ist besonders bevorzugt, dass in Umfangsrichtung benachbart angeordnete weitere Vorsprünge, die jeweils zu benachbarten Gruppen weiterer Vorsprünge gehören, in Längsrichtung des Drehrohrs versetzt zueinander angeordnet sind, derart, dass spiralförmige Transportpfade für das Brenngut entlang der Vorwärmzone gebildet sind. Hierdurch kann die Verweilzeit des Gutes im Drehrohrofen reduziert und bei gleichbleibender Produktqualität der Durchsatz erhöht werden. Bevorzugt ist die Anzahl der Gruppen von in Längsrichtung des Drehrohrs hintereinander angeordneten weiteren Vorsprüngen an die Anzahl der Gruppen aneinandergereihter Vorsprünge in der Einlaufzone angepasst.

Die weiteren Vorsprünge können unterschiedliche Geometrien aufweisen. Besonders bevorzugt werden wiederum prismatische Geometrien. In Untersuchungen der Anmelderin haben sich Trapezstrukturen als besonders geeignet erwiesen, speziell ein gerades Prisma mit der Grundfläche eines gleichschenkligen Trapezes, wobei die Trapezflächen senkrecht zur Ofeninnenwand angeordnet sind. Um eine hinreichende Hitzebeständigkeit sicherzustellen, kann vorgesehen sein, dass die weiteren Vorsprünge Beton, insbesondere Feuerbeton, welcher seinerseits aus dem Stand der Technik bekannt ist, enthalten. Speziell kann die Trapezkontur durch eine Schalung aus einem metallischen Werkstoff gebildet sein, welcher entsprechende Öffnungen aufweist, in die Beton eingegossen werden kann. Bevorzugt weisen die weiteren Vorsprünge eine Höhe zwischen 100 mm und 300 mm, bevorzugt von ca. 200 mm, und eine Länge in Längsrichtung des Drehrohrs von ebenfalls zwischen 100 mm und 400 mm, bevorzugt ca. 400 mm, auf. Die Trapezbasis des Trapezprismas hat ebenfalls eine Länge zwischen 100 mm und 400 mm, bevorzugt ca. 400 mm, während die zur Trapezbasis parallele obere Kante eine Länge zwischen 50 mm und 150 mm, bevorzugt, von ca. 100 mm, aufweist.

Nach einer weiteren besonders vorteilhaften Ausgestaltung der Erfindung kann darüber hinaus vorgesehen sein, dass das Drehrohr im Bereich der Auslaufzone wenigstens einen zusätzlichen Vorsprung, bevorzugt eine Gruppe von zusätzlichen Vorsprüngen, zur Vermeidung der Clusterbildung im gebrannten Gut aufweist. Hierdurch setzt im Bereich des Auslaufendes eine besonders gleichmäßige Kühlung des gesamten gebrannten Gutes ein, wodurch sich die Ofenleistung und die Qualität des gebrannten Gutes wirksam verbessern lässt und zudem nachgelagerte Anlagenkomponenten, beispielsweise Rostkühler, vor Überhitzung geschützt werden, was wiederum zu einer verlängerten Lebensdauer des gesamten Ofens führt.

Bevorzugt ist dabei im Bereich der Auslaufzone eine Mehrzahl von zusätzlichen Vorsprüngen vorgesehen, wobei die zusätzlichen Vorsprünge in Umfangsrichtung des Drehrohrs als Gruppen, in Längsrichtung des Drehrohrs dabei bevorzugt versetzt zueinander, angeordnet sind, um die Materialdurchmischung und damit die Gleichmäßigkeit der Kühlwirkung zu maximieren. Dabei sind wiederum in Längsrichtung des Drehrohrs bevorzugt eine Mehrzahl von Gruppen zusätzlicher Vorsprünge vorgesehen. Bevorzugt ist ferner die Anzahl der über den Innenumfang des Drehrohrs angeordneten zusätzlichen Vorsprünge an die Anzahl der über den Umfang des Drehrohrs angeordneten weiteren Vorsprünge in der Vorwärmzone angepasst, bevorzugt identisch.

Die zusätzlichen Vorsprünge können unterschiedliche Geometrien aufweisen. Besonders bevorzugt ist die Geometrie eines Pyramidenstumpfes mit der Grundfläche eines gleichschenkligen spitzwinkligen Dreiecks mit aus Stabilitätsgründen bevorzugt abgestumpfter Spitze, wobei der abgestumpfte spitze Winkel in Drehrichtung des Drehrohrs vorauseilt und somit durch das gebrannte Gut gleichsam pflügt. Um eine hinreichende Hitzebeständigkeit sicherzustellen, kann vorgesehen sein, dass die zusätzlichen Vorsprünge Beton, insbesondere Feuerbeton, welcher seinerseits aus dem Stand der Technik bekannt ist, enthalten. Bevorzugt weisen die zusätzlichen Vorsprünge eine Höhe zwischen 100 mm und 300 mm, bevorzugt von ca. 200 mm, und eine Länge in Umfangsrichtung des Drehrohrs (Höhe der gleichschenkligen dreieckigen Basisfläche des Pyramidenstumpfes) zwischen 300 mm und 500 mm, bevorzugt von ca. 400 mm auf. Die Breite der dem spitzen Winkel der gleichschenkligen dreieckigen Basisfläche gegenüberliegenden Dreiecksseite weist zwischen 50 mm und 150 mm, bevorzugt ca. 300 mm auf.

Die eingangs genannte Aufgabe wird verfahrensmäßig nach einem weiteren Aspekt der vorliegenden Erfindung mit einem Verfahren zum Brennen von karbonathaltigem Gut, insbesondere von Kalkstein oder Dolomit, gelöst, welches folgende Schritte aufweist:
- Einleiten des karbonathaltiges Gutes in das Drehrohr eines Drehrohrofens nach einem der Ansprüche 1 bis 14,
- Brennen des karbonathaltiges Gutes, wobei sich das karbonathaltige Gut durch das Drehrohr von der Einlaufzone durch die Brennzone zur Auslaufzone bewegt, wobei sich das Drehrohr in einer Drehrichtung dreht,
- Förderung des karbonathaltigen Gutes aus der Einlaufzone in die Brennzone, indem das karbonathaltige Gut zumindest teilweise auf der zur Längsachse des Drehrohrs geneigten Gleitfläche des wenigstens einen Vorsprungs aufliegt und schwerkraftgetrieben in Richtung der Vorwärmzone gleitet.

Für das Verfahren gelten die vorstehend genannten Vorteile entsprechend. Insbesondere wird ein effizientes Brennverfahren vorgeschlagen, welches sich durch einen hohen Materialdurchsatz durch den Drehrohrofen, eine gleichmäßig hohe Produktqualität bei dem gebrannten Gut sowie durch eine einfache Durchführbarkeit auszeichnet. Speziell wird eine Rückwärtsbewegung des zu brennenden Gutes in der Einlaufzone des Drehrohrs und damit eine mögliche Verstopfung bzw. Zusetzung wirksam vermieden.

Im Folgenden wird die Erfindung anhand einer ein Ausführungsbeispiel darstellenden Zeichnung näher erläutert. Es zeigen:
- Fig. 1a: das Drehrohr eines Drehrohrofens mit in der Einlaufzone des Drehrohrs angeordneten Vorsprüngen zur Förderung des zu brennenden Gutes von der Einlaufzone in die Brennzone des Drehrohrs in perspektivischer Ansicht,
- Fig. 1b: eine Ausschnittvergrößerung des Drehrohrs der Fig. 1a mit teilweise ausgeschnittener Ofenwand in perspektivischer Ansicht,
- Fig. 2: die als Gruppen gestuft aneinandergereihten Vorsprünge in der Einlaufzone des Drehrohrs der Fig. 1a in längsgeschnittener perspektivischer Ansicht gemäß Fig. 4,
- Fig. 3: einen Vorsprung ("Verdränger") in der Einlaufzone des Drehrohrs der Fig. 1a in perspektivischer Ansicht,
- Fig. 4: das Drehrohr der Fig. 1a in perspektivischer Längsschnittansicht,
- Fig. 5: eine Anzahl weiterer Vorsprünge in der Vorwärmzone des Drehrohrs der Fig. 1a in perspektivischer Längsschnittansicht gemäß Fig. 4,
- Fig. 6: einen weiteren Vorsprung ("Mitnehmer") in der Vorwärmzone des Drehrohrs der Fig. 1a in perspektivischer Ansicht,
- Fig. 7: die zusätzlichen Vorsprünge in der Auslaufzone des Drehrohrs der Fig. 1a in perspektivischer Längsschnittansicht gemäß Fig. 4,
- Fig. 8: einen zusätzlichen Vorsprung ("Schwert") in der Auslaufzone des Drehrohrs der Fig. 4 in perspektivischer Ansicht; und
- Fig. 9: die zweidimensionale Darstellung der "abgewickelten" Offeninnenwand des Drehrohrs in stark schematisierter Form.

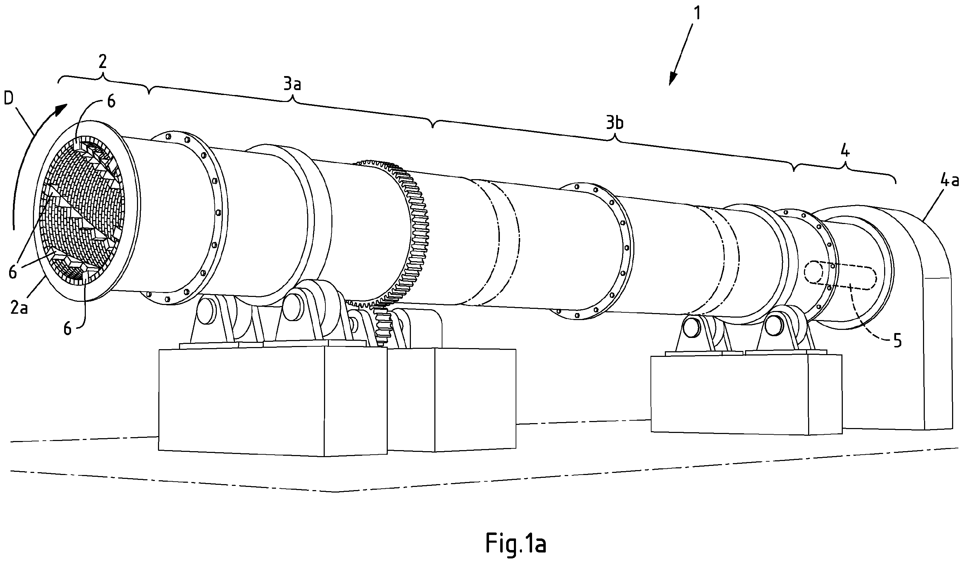

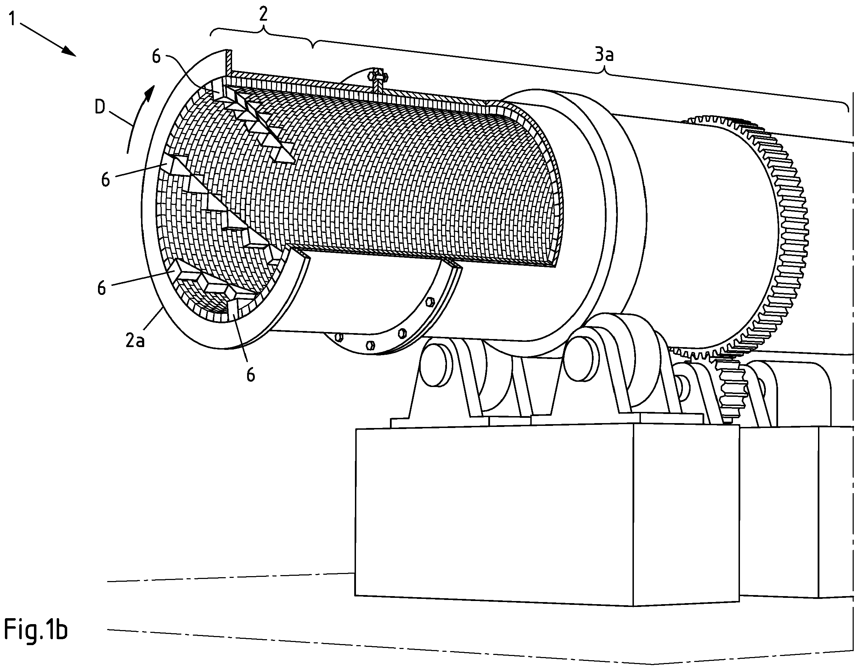

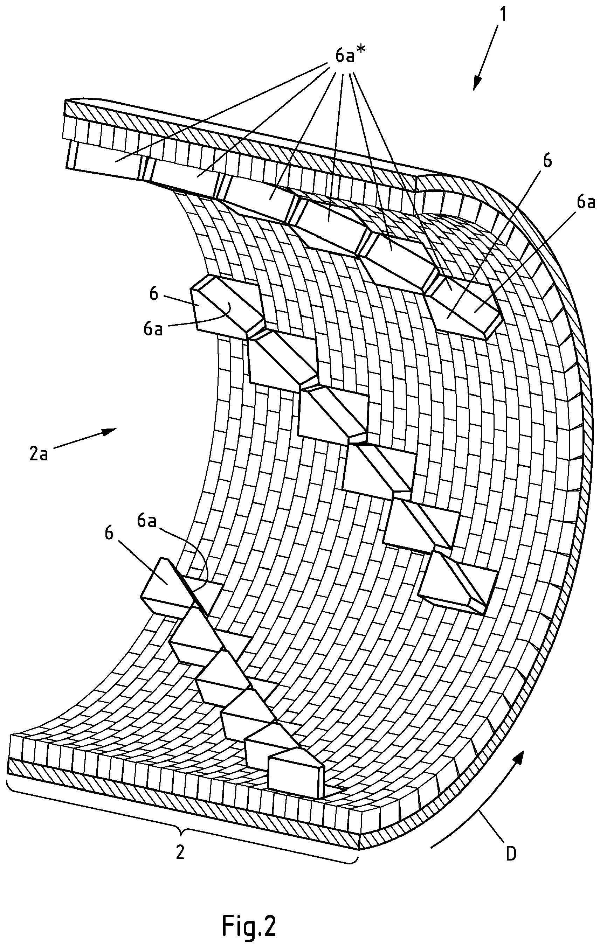

In Fig. 1a ist das Drehrohr 1 eines Drehrohrofens mit üblichen Lagerungs- und Antriebskomponenten, auf die im Folgenden nicht näher eingegangen wird, dargestellt. Das Drehrohr 1 umfasst ein - hier vorderseitig dargestelltes - Einlaufende 2a und ein rückseitiges Auslaufende 4a. Entlang der Längserstreckung des Drehrohrs 1 umfasst das Drehrohr 1 in Bezug auf den Materialaufgabe-, Brenn- und Materialaustragprozess eine Einlaufzone 2, eine Brennzone 3 sowie eine Auslaufzone 4. Wie in Fig. 1a, insbesondere jedoch in der teilweisen Schnittansicht der Fig. 1b und der Längsschnittansicht der Fig. 2, erkennbar, weist das Drehrohr 1 in seiner Einlaufzone 2 eine Mehrzahl von Vorsprüngen 6 auf, die eine spezifische Form aufweisen und als Gruppen 61 in gestufter Form aneinandergereiht angeordnet sind, wie im Folgenden beschrieben wird. Die Vorsprünge 6 werden fachsprachlich auch als "Verdränger" bezeichnet.

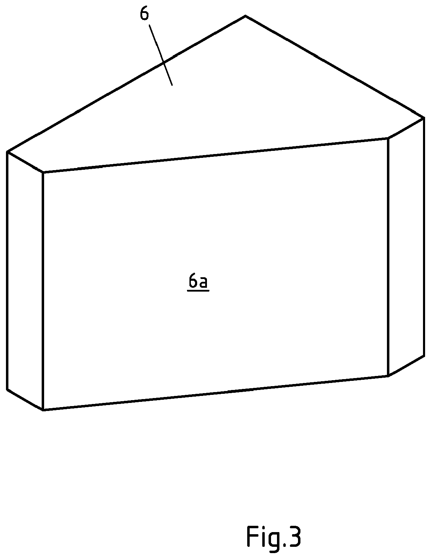

Wie in den Fig. 1a, 1b und 2 gezeigt, sind die als Gruppe 61 von vorliegend sechs aneinandergereihten Vorsprünge 6 im Wesentlichen zueinander identisch ausgebildet und weisen gemäß Fig. 3 vorliegend die Form eines geraden Prismas mit der Grundfläche eines rechtwinkligen, gleichschenkligen Dreiecks auf, wobei die nichtrechtwinkligen Winkel des Dreiecks abgestumpft sind. Jeder Vorsprung 6 weist eine Gleitfläche 6a auf, welche zur Längsachse des Drehrohres 1 geneigt angeordnet ist. Bevorzugt ist dabei ein Neigungswinkel von ca. 45° gewählt. Wie erwähnt, sind die Vorsprünge 6 in gestufter Form aneinander gereiht, und zwar derart, dass durch die einzelnen Gleitflächen 6a der Vorsprünge 6 eine gemeinsame Gleitfläche 6a* ergibt, welche vorliegend ebenfalls in einem Winkel von ca. 45° zur Längsachse des Drehrohrs 1 geneigt ist.

Ferner sind die Gleitflächen 6a der Vorsprünge 6 bzw. die gemeinsame Gleitfläche 6a* der gruppenweise aneinandergereihten Vorsprünge 6 relativ zur Drehrichtung D des Drehrohrs 1 derart ausgerichtet, dass im Betrieb des Ofens das zu brennende Gut (nicht dargestellt) auf den Gleitflächen 6a der Vorsprünge zu liegen kommt, und aufgrund der gewählten Neigung der Gleitflächen 6a zur Längsachse des Drehrohrs 1 schwerkraftbedingt zügig in Richtung der Brennzone 3 gleitet.

Wie in Fig. 1a gezeigt, sind über den Umfang verteilt an der Innenwand des Drehrohrs 1 eine Mehrzahl von Gruppen 61 gestuft aneinandergereihter Vorsprünge 6 vorgesehen. Vorliegend ist eine Anzahl von sechs Gruppen 61 gewählt.

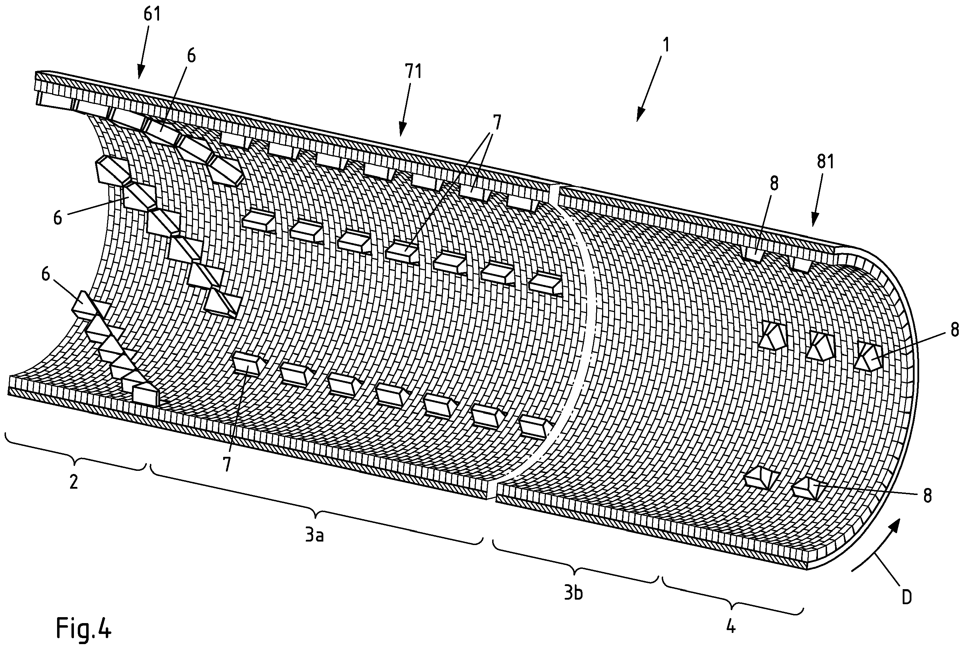

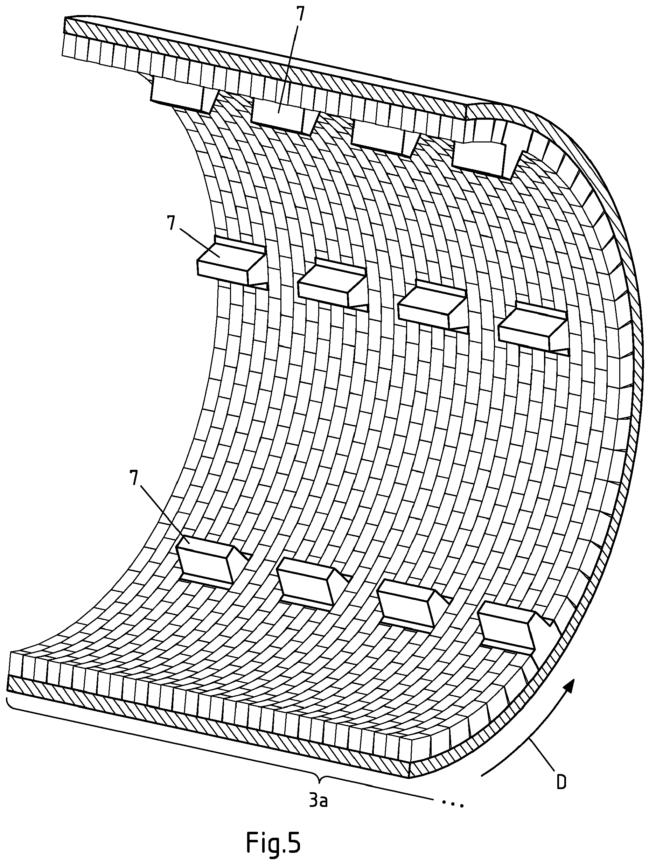

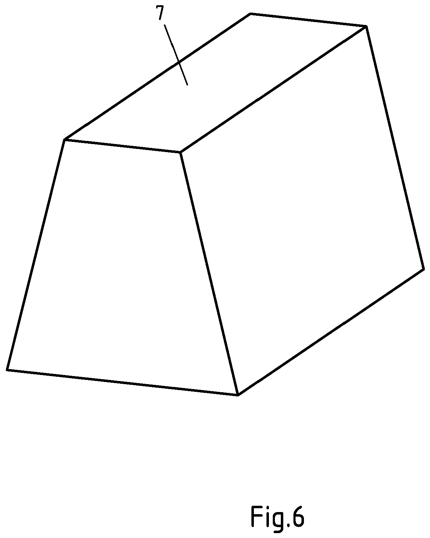

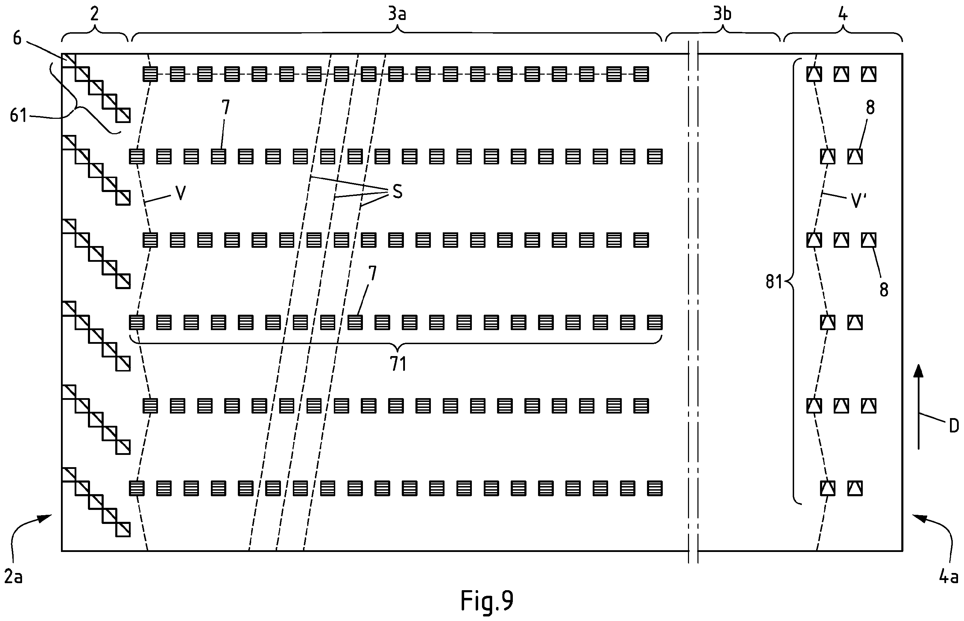

In der perspektivischen Längsschnittdarstellung des Drehrohrs 1 der Fig. 4 ist nun dargestellt, dass neben den in der Einlaufzone 2 des Drehrohrs 1 vorgesehenen Vorsprüngen 6 in der Vorwärmzone 3a weitere Vorsprünge 7 (fachsprachlich "Mitnehmer") vorgesehen sein können. Diese dienen dazu, dass das infolge der Vorsprünge 6 nunmehr schneller durch die Einlaufzone 2 transportierte zu brennende Gut zügig und mit verbesserter Vermischung auch durch die Vorwärmzone 3a transportiert wird, so dass es insbesondere im Bereich des Übergangs von der Einlaufzone 2 zur Vorwärmzone 3a nicht zu Materialaufstauungen kommen kann. Ferner dienen sie der Reduzierung der Staubbildung in der Vorwärmzone 3a. Wie in Fig. 6 gezeigt, weisen diese weiteren Vorsprünge 7 ("Mitnehmer") die Form eines geraden Prismas mit der Grundfläche eines gleichschenkligen Trapezes auf, wobei die Trapezflächen senkrecht zur Innenwand des Drehrohrs 1 angeordnet sind. Wie ferner in Fig. 4 erkennbar, sind die weiteren Vorsprünge 7 als Gruppen 71 parallel zur Längsachse des Drehrohrs 1 angeordnet, wobei die Vorwärmzone 3a mit den weiteren Vorsprüngen 7 (und damit das Drehrohr 1) in Fig. 4 nicht in voller Länge dargestellt ist. Ein Ausschnitt der Vorwärmzone 3a mit den weiteren Vorsprüngen 7 ist der besseren Übersichtlichkeit halber in Fig. 5 dargestellt. Die relative Anordnung der einzelnen Gruppen 71 der weiteren Vorsprünge 7 zueinander und zu den Gruppen 61 der Vorsprünge 6 in der Einlaufzone zeigt insbesondere Fig. 9.

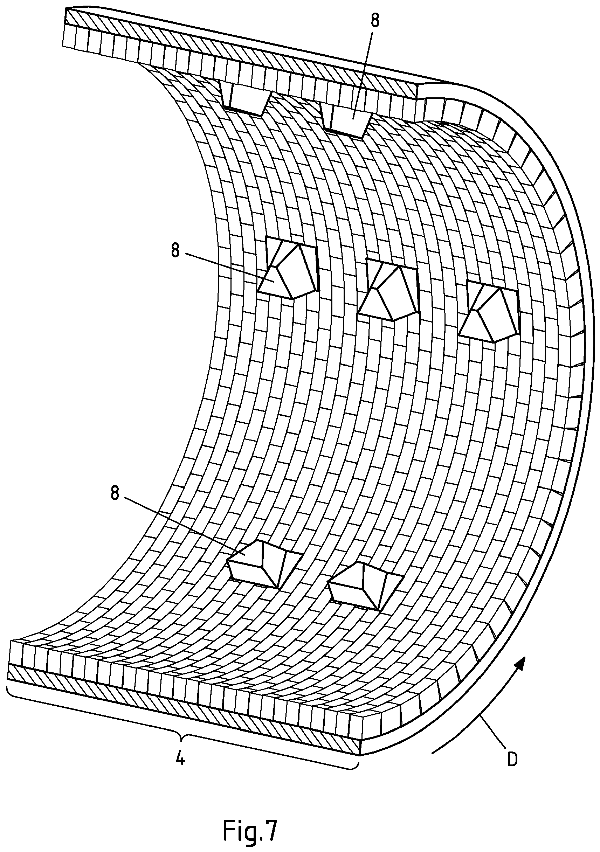

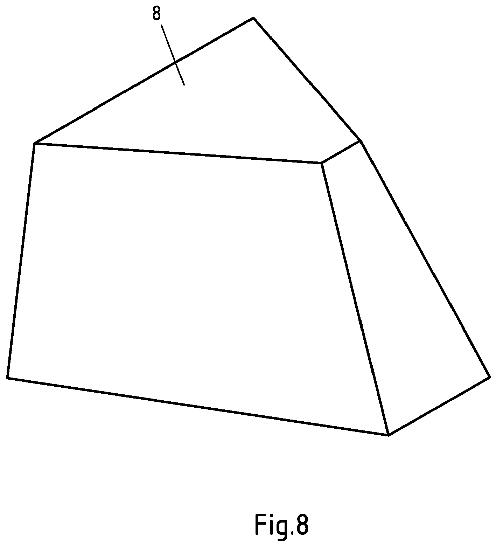

Ferner ist in Fig. 4 dargestellt, dass in der Auslaufzone 4 des Drehrohrs 1 eine Mehrzahl von zusätzlichen Vorsprüngen 8 vorgesehen ist, wobei die zusätzlichen Vorsprünge 8 in Umfangsrichtung des Drehrohrs 1 als Gruppen 81 und in Längsrichtung des Drehrohrs 1 dabei versetzt zueinander angeordnet sind. Diese zusätzlichen Vorsprünge 8 (fachsprachlich "Schwerter") diesen zur Vermeidung der Clusterbildung im gebrannten Gut. Wie in Fig. 8 gezeigt, weisen diese zusätzlichen Vorsprünge 8 die Form eines Pyramidenstumpfes mit der Grundfläche eines gleichschenkligen spitzwinkligen Dreiecks auf, wobei der spitze Winkel in Drehrichtung des Drehrohrs vorauseilt und aus Stabilitätsgründen leicht abgestumpft ist. Die Auslaufzone 3 mit den zusätzlichen Vorsprüngen 8 ist der besseren Übersichtlichkeit halber nochmal in Fig. 7 dargestellt. Die relative Anordnung der einzelnen Gruppen 81 der zusätzlichen Vorsprünge 8 ("Schwerter") zueinander und zu den Gruppen 71 der weiteren Vorsprünge 7 ("Mitnehmer") in der Einlaufzone zeigt Fig. 9.

In Fig. 9 ist nun in stark schematischer Form eine Darstellung der "abgewickelten" Ofeninnenwand des Drehrohrs gezeigt. Dies bedeutet, dass die Verteilung sämtlicher vorgesehener Vorsprünge 6 ("Verdränger") in der Einlaufzone 6, weiterer Vorsprünge 7 ("Mitnehmer") in der Vorwärmzone 3a und zusätzlicher Vorsprünge 8 ("Schwerter") in der Auslaufzone 4 des Drehrohrs 1 in zweidimensionaler Darstellung gezeigt ist, wobei die Brennzone 3 wiederum nicht vollständig dargestellt ist. Demnach sind in der Einlaufzone 2 über den Umfang verteilt sechs Gruppen 61 jeweils fünf gestuft aneinandergereihter Vorsprünge 6 ("Verdränger") vorgesehen. In der sich an die Einlaufzone 2 anschließenden Vorwärmzone 3a sind ebenfalls sechs Gruppen 71 in Längsrichtung des Drehrohrs 1 hintereinander angeordneter weiterer Vorsprünge 7 ("Mitnehmer") vorgesehen. In Umfangsrichtung benachbart angeordnete weitere Vorsprünge 7 sind versetzt zueinander positioniert, wie durch die Hilfslinie V in Fig. 9 dargestellt. Durch diese versetzte Anordnung ergeben sich im Drehrohr 1 spiralförmige Transportpfade, auf denen das zu brennende Gut sich hindernisfrei durch die Vorwärmzone 3a bewegen kann. Die spiralförmigen Transportpfade sind in der zweidimensionalen Darstellung der Fig. 9 exemplarisch als parallele schräg verlaufende Linien S dargestellt.

Ferner sind in Fig. 9 die in der Auslaufzone 4 des Drehrohrs 1 vorgesehenen zusätzlichen Vorsprünge 8 ("Schwerter") dargestellt. Diese sind, wie erwähnt, in Umfangsrichtung des Drehrohrs 1 in Gruppen 81 angeordnet, wobei die zusätzlichen Vorsprünge 8 einer Gruppe 81 in Längsrichtung zueinander versetzt sind, um eine maximale Menge an gebranntem Gut zu bearbeiten. Der Versatz in Längsrichtung des Drehrohrs 1 ist in Fig. 9 durch die Hilfslinie V' dargestellt. Vorliegend sind zwei Gruppen 81 à fünf zusätzlichen Vorsprüngen 8 vorgesehen. Die am Auslaufende 4 des Drehrohrs angeordnete Gruppe 81 umfasst lediglich drei zusätzliche Vorsprünge 8. Im Gegensatz zu den Vorsprüngen 6 der Einlaufzone 2 reichen die zusätzlichen Vorsprünge 8 nicht bis ans Auslaufende 4a des Drehrohrs 1 heran. Vielmehr kann ein gewisser Abstand von bevorzugt ca. 1 m gewählt sein.

## Patentansprüche

1. Drehrohrofen zum Brennen von karbonathaltigem Gut, insbesondere von Kalkstein oder Dolomit, umfassend ein Drehrohr (1) mit einem Einlaufende (2a) zur Aufgabe des zu brennenden Gutes und einem Auslaufende (4a) zur Ausleitung des gebranntes Gutes, wobei das Drehrohr (1) an seinem Einlaufende (2a) eine Einlaufzone (2) aufweist und an seinem Auslaufende (4a) eine Auslaufzone (4) aufweist, wobei zwischen der Einlaufzone (2) und Auslaufzone (4) eine Vorwärmzone (3a) und eine Brennzone (3b) angeordnet sind,
**dadurch gekennzeichnet, dass**
in der Einlaufzone (2) des Drehrohrs (1) wenigstens ein Vorsprung (6) vorgesehen ist, wobei der wenigstens eine Vorsprung (6) wenigstens eine zur Längsachse des Drehrohrs (1) geneigte Gleitfläche (6a) zur Förderung des zu brennenden Gutes aus der Einlaufzone (2) in die Brennzone (3) aufweist.

2. Drehrohrofen nach Anspruch 1,
**dadurch gekennzeichnet, dass**
die wenigstens eine Gleitfläche (6a) des wenigstens einen Vorsprungs (6) eine Neigung zur Längsachse des Drehrohrs (1) von 15° bis 70°, insbesondere von 25° bis 65°, speziell von 35° bis 55° und besonders bevorzugt von 40° bis 50°, aufweist.

3. Drehrohrofen nach Anspruch 1 oder 2,
**dadurch gekennzeichnet, dass**
der wenigstens eine Vorsprung (6) ein feuerfestes Material enthält, wobei optional das feuerfeste Material Beton, insbesondere Feuerbeton, ist.

4. Drehrohrofen nach einem der Ansprüche 1 bis 3,
**dadurch gekennzeichnet, dass**
der wenigstens eine Vorsprung (6) eine prismatische Geometrie aufweist, wobei optional der wenigstens eine Vorsprung (6) als gerades Prisma mit dreieckiger Grundfläche ausgebildet ist.

5. Drehrohrofen nach einem der Ansprüche 1 bis 4,
**dadurch gekennzeichnet, dass**
der wenigstens eine Vorsprung (6) eine sich in radialer Richtung des Drehrohrs (1) erstreckende Höhe von 100 mm bis 500 mm, insbesondere von 140 mm bis 400 mm, bevorzugt von 160 mm bis 300 mm und besonders bevorzugt von 180 mm bis 250 mm, aufweist,
und/oder dass der wenigstens eine Vorsprung (6) eine sich im Wesentlichen parallel zur Längsachse des Drehrohrs (1) erstreckende Länge von 100 mm bis 2000 mm, insbesondere 150 mm bis 1000 mm, bevorzugt 300 mm bis 500 mm und ganz besonders bevorzugt 350 mm bis 450 mm, aufweist, und/oder dass der wenigstens eine Vorsprung (6) mittels einer metallischen Verankerung, insbesondere einer verschweißten metallischen Verankerung, an der Innenseite des Drehrohrmantels (1) befestigt ist.

6. Drehrohrofen nach einem der Ansprüche 1 bis 5,
**dadurch gekennzeichnet, dass**
in der Einlaufzone (2) des Drehrohrs (1) eine Mehrzahl von Vorsprüngen (6) vorgesehen ist, wobei die Vorsprünge (6) derart als Gruppe (61) aneinandergereiht angeordnet sind, dass die jeweiligen Gleitflächen (6a) der Vorsprünge eine gemeinsame Gleitfläche (6a*) für das zu brennende Gut bilden.

7. Drehrohrofen nach Anspruch 6,
**dadurch gekennzeichnet, dass**
sich die durch die Mehrzahl von Vorsprüngen (6) gebildete gemeinsame Gleitfläche (6a*) im Wesentlichen über die gesamte Länge der Einlaufzone (2) erstreckt.

8. Drehrohrofen nach Anspruch 6 oder 7,
**dadurch gekennzeichnet, dass**
die gemeinsame Gleitfläche (6a*) für das zu brennende Gut durch 3 bis 9 Vorsprünge (6), insbesondere durch 4 bis 8 Vorsprünge (6), speziell durch 5 bis 7 Vorsprünge (6) und ganz besonders bevorzugt durch 6 Vorsprünge (6) gebildet wird.

9. Drehrohrofen nach einem der Ansprüche 6 bis 8,
**dadurch gekennzeichnet, dass**
die Mehrzahl von Vorsprüngen (6) im Wesentlichen identisch zueinander ausgebildet sind, derart, dass eine gemeinsame Gleitfläche (6a*) mit im Wesentlichen konstantem Gefälle ausgebildet ist,
und/oder die Mehrzahl von Vorsprüngen (6) entlang der Einlaufzone (2) in gestufter Form als Gruppe (61) aneinandergereiht angeordnet sind.

10. Drehrohrofen nach einem der Ansprüche 1 bis 9,
**dadurch gekennzeichnet, dass**
über den Umfang des Drehrohrs (1) 2 bis 8, insbesondere 3 bis 7, speziell 4 bis 6 und ganz besonders bevorzugt 5 Vorsprünge oder Gruppen (61) aneinandergereihter Vorsprünge (6), angeordnet sind.

11. Drehrohrofen nach einem der Ansprüche 1 bis 10,
**dadurch gekennzeichnet, dass**
das Drehrohr (1) im Bereich der Vorwärmzone (3a) wenigstens einen weiteren Vorsprung (7), bevorzugt eine Mehrzahl von weiteren Vorsprüngen (7), zur schnelleren Durchleitung des zu brennenden Gutes durch die Vorwärmzone (3a) und zur Reduzierung der Staubbildung aufweist.

12. Drehrohrofen nach Anspruch 11,
**dadurch gekennzeichnet, dass**
im Bereich der Vorwärmzone (3a) eine Mehrzahl von weiteren Vorsprüngen (7) vorgesehen ist, wobei die weiteren Vorsprünge (7) als Gruppen (71) im Wesentlichen parallel zur Längsachse des Drehrohrs (1) angeordnet sind, worin optional in Umfangsrichtung benachbart angeordnete weitere Vorsprünge (7) benachbarter Gruppen (71) weiterer Vorsprünge (7) in Längsrichtung des Drehrohrs (1) versetzt zueinander angeordnet sind, derart, dass spiralförmige Transportpfade (S) für das zu brennende Gut gebildet sind.

13. Drehrohrofen nach einem der Ansprüche 1 bis 12,
**dadurch gekennzeichnet, dass**
das Drehrohr (1) im Bereich der Auslaufzone (4) wenigstens einen zusätzlichen Vorsprung (8), bevorzugt eine Gruppe (81) von zusätzlichen Vorsprüngen (8), zur Vermeidung der Clusterbildung im gebrannten Gut aufweist.

14. Drehrohrofen nach Anspruch 13,
**dadurch gekennzeichnet, dass**
im Bereich der Auslaufzone (4) eine Mehrzahl von zusätzlichen Vorsprüngen vorgesehen ist, wobei die zusätzlichen Vorsprünge (8) in Umfangsrichtung des Drehrohrs (1) als Gruppen (81), in Längsrichtung des Drehrohrs (1) dabei bevorzugt versetzt zueinander, angeordnet sind,
worin optional in Längsrichtung des Drehrohrs (1) eine Mehrzahl von Gruppen (81) zusätzlicher Vorsprünge (8) vorgesehen sind.

15. Verfahren zum Brennen von karbonathaltigem Gut, insbesondere von Kalkstein oder Dolomit,
**gekennzeichnet durch** folgende Schritte:
- Einleiten des karbonathaltiges Gutes in das Drehrohr (1) eines Drehrohrofens nach einem der Ansprüche 1 bis 14,
- Brennen des karbonathaltiges Gutes, wobei sich das karbonathaltige Gut durch das Drehrohr von der Einlaufzone (2) durch die Brennzone (3) zur Auslaufzone (4) bewegt, wobei sich das Drehrohr in einer Drehrichtung (D) dreht,
- Förderung des karbonathaltigen Gutes aus der Einlaufzone (2) in die Vorwärmzone (3a), indem das karbonathaltige Gut zumindest teilweise auf der zur Längsachse des Drehrohrs geneigten Gleitfläche (6a) des wenigstens einen Vorsprungs (6) aufliegt und schwerkraftgetrieben in Richtung der Vorwärmzone (3a) gleitet.
